# EUROPEAN PATENT APPLICATION

(11) **EP 4 194 233 A1**
(43) Date of publication of application: **14.06.2023**
(21) Application number: 21213768.1
(22) Date of filing: 10.12.2021
(51) Int. Cl.: B60D 1/145, A01B 59/042, B60D 1/44, B60D 1/62, B62D 13/06

(54) **A CONTROLLABLE DRAWBAR ARRANGEMENT AND METHOD FOR CONTROLLING SUCH DRAWBAR ARRANGEMENT**

(71) Applicant: VBG Group AB (Publ), 461 34 Trollhättan (SE)
(72) Inventor: FORSDAHL, Gustav, 462 94 FRÄNDEFORS (SE); KALLIOKORPI, Miso, 462 41 VÄNERSBORG (SE)
(74) Representative: Lind Edlund Kenamets Intellectual Property AB

(57) **Abstract**

A controllable drawbar arrangement and a method for controlling a drawbar arrangement is provided. The drawbar arrangement comprises a drawbar (8,18,23,44,54,76) movably attached to a wheelset of a trailer and a first actuator (26,42) coupled to said drawbar and configured to control a lateral movement of said drawbar. The drawbar arrangement further comprising a sensor arrangement (56,58,60a,60b) configured to detect a set of parameters in an upcoming environment of said trailer and a control unit (27,55,78) communicatively coupled to said sensor arrangement and configured to determine a desired lateral position of said drawbar based on said set of parameters, said control unit further being configured to control the first actuator such that said drawbar is set into the desired lateral position.

## Description

### Technical field

The present invention relates to drawbars for trailers, more specifically to controllable drawbars for trailers.

### Background

Trucks are often used to transport goods and is commonly used for towing trailers in order to improve the loading capabilities. Truck with attached trailers constitute a relatively long vehicle affecting its maneuverability and turning radius. Accordingly, there is a demand of improved maneuverability of trucks and their attached trailers, especially to improve their maneuverability at roads being difficult to access due to for example buildings or other structures arranged close to the road that may obstruct movement of the truck and its attached trailer. In order to achieve a certain turning radius for the truck and the trailer, towbars of different lengths have often been implemented.

Another approach is to use drawbar having an adjustable length in order to improve the maneuverability and to achieve an adjustable setting. An example of a drawbar with adjustable length is presented in WO12153005 A1, where the drawbar has an adjustable length in order to create a versatile arrangement in connection with the drawbar of a trailer which will permit a truck to be reversed to couple a trailer.

Yet another approach to improve the maneuverability is to implement a drawbar being pivotably attached to the trailer. An example of a drawbar being pivotably attached to a trailer is presented in EP0869896 B1.
Despite the improvements within prior art there is still room for an improved drawbar for a trailer in order to achieve an improved maneuverability.

### Summary of the invention

It is an object of the present inventive concept to mitigate, alleviate or eliminate one or more of the above-identified deficiencies in the art and disadvantages singly or in combination. In particular, it may be desirable to provide an improved control of a truck and attached trailer.

According to a first aspect of the inventive concept, these and other objects are achieved in full, or at least in part, by a drawbar arrangement for attachment to a wheelset of a trailer for being coupled to a truck or an intermediate trailer, the drawbar arrangement comprises a drawbar comprising a distal end having a coupling means and configured to be laterally displaceable and coupled to the truck or intermediate trailer, and a first actuator arranged to displace the distal end of the drawbar.

The drawbar arrangement further comprises a sensor arrangement configured to detect a set of parameters in an upcoming environment of said trailer, and a control unit communicatively coupled to said sensor arrangement and configured to receive said set of parameters and determine a desired lateral position of said coupling means based on said set of parameters, said control unit further being configured to control the drawbar arrangement such that said coupling means is set into the desired lateral position.

The invention is based on the understanding that the sensor arrangement may facilitate controlling the lateral position of the drawbar by the trailer being steered by controlling the lateral position of the drawbar according to the upcoming environment detected by the sensor arrangement. This may increase the maneuverability of the truck and trailer while simultaneously controlling the trailer in a safe way, e.g. not risk hitting obstacles and/or ensuring the trailer is directed to an available space.

Hence, the drawbar arrangement may be controlled according to the desired lateral position such that the trailer is controlled according to a desired yaw of the trailer based on the desired lateral/pivoting position of the drawbar when the drawbar arrangement is attached to the trailer.

The lateral displacement may be achieved in different ways. In one example it is a pivoting motion, and the controlled position of the drawbars distal end may therefore be described as a desired pivoting position. In other examples the lateral position may be achieved in other ways, as illustrated and discussed below. Therefore, the wording pivoting position and lateral position may be used interchangeably in the application text.

In one embodiment, the drawbar arrangement comprises a base portion for attachment to the front wheelset, a drawbar pivotably attached to the base portion at a first axis of the base portion such that the drawbar is pivotable in a pivoting plane. The drawbar may be pivotably attached to the base portion such that the pivoting plane is arranged substantially parallel to the ground on which the trailer is standing when said drawbar arrangement is attached to the trailer. In other words, the first axis of the base portion may be arranged substantially vertically when said drawbar arrangement is attached to the trailer.

The first actuator may be coupled to the drawbar and the base portion and configured to control a pivoting action of said drawbar in the pivoting plane and a sensor arrangement configured to detect a set of parameters in an upcoming environment of the trailer.

The upcoming environment of the trailer will be discussed further below and may comprise at least one of an environment in a predicted path of the trailer (e.g. an environment in front of the trailer when going forwards, and an environment behind the trailer when going backwards), a coupling of a truck in front of the trailer, and a position of the drawbar.

For example, the sensor arrangement may be configured to detect obstacles and/or available space in a predicted path of the trailer. The obstacles may for example be a traffic signs, a lamp posts, buildings, concrete blocks, rocks, boulders, other vehicles, humans, animals and/or any type of obstacles that may be found in road conditions.

The type of actuator(s) discussed herein may for example be a linear actuator, a circular actuator, or any type of actuator suitable to control the pivot lateral and or pivoting position of the drawbar with respect to the base portion.

The trailer may be substantially elongated extending between a front and aft side. Further, the trailer may have a main towing direction wherein the main towing direction is typically a forward direction of the trailer, i.e. a direction resulting from towing the trailer using the drawbar of the drawbar arrangement in a direction straight forward. In other words, the main towing direction may be a direction extending from the aft side of the trailer to the front side parallel to the extension of the trailer. Analogously, the truck may have a main driving direction, typically a forward direction of the truck, i.e. a direction resulting from driving the truck in a direction straight forward.

In the context of this application, the lateral position should be understood as a side position being transversal to a longitudinal axis running from the trailer's aft side to the front side. When the lateral position is moved away from a position along a centered longitudinal axis, an angle, being different from 90°, is created between the distal portion of the drawbar and the first wheel axis.

In one embodiment the trailer comprises a frame having at least a rear wheelset and a front wheelset.

By attachment of the drawbar arrangement to the front wheelset it is hereby meant that the drawbar arrangement may be directly attached to the front wheelset and/or by an extension portion. Further this may mean that the drawbar arrangement is attached to a frame of the trailer that is in connection with the front wheelset.

The first aspect may also facilitate controlling the drawbar arrangement according to a desired pivoting position, which in turn may provide a facilitated control of the trailer based on an upcoming environment of the trailer, when the drawbar arrangement is attached to the trailer. For example, the drawbar arrangement may be controlled such that obstacles is avoided by the trailer when the drawbar arrangement is attached to the trailer.

Further, the first aspect may provide a facilitated coupling of the trailer to the truck by the drawbar may be achieved based on the relative position between the drawbar and the coupling of the truck arranged in front of the trailer, when the drawbar arrangement is attached to the trailer. In this use scenario, a coupling unit on the towing vehicle may constitute a part of the detected parameters in the upcoming environment.

The first aspect may also provide the ability for a vehicle, such as the truck, to straddle the drawbar of the drawbar arrangement and thus an improved access to the trailer from a vehicle straddling the drawbar may be achieved since the drawbar is attached to the front wheelset of the trailer constituting a relatively low portion of the trailer.

The sensor arrangement, which will be further discussed below, may be any sensor suitable to detect the environment of the trailer.

According to an embodiment the control unit further receives a driving scenario indicating at least one of
- a driving speed,
- a forward driving direction
- a backward driving direction,
- a steering direction, and
- a coupling action of the trailer to the truck or the intermediate trailer by the drawbar arrangement, and
wherein the driving scenario received by the control unit activates the sensor arrangement and/or constitutes and input parameter for determination of the desired pivoting position of the drawbar.

This embodiment is advantageous in providing additional input parameters for determination of the desired pivoting position and/or providing information for the drawbar arrangement to know when to activate the sensor arrangement.

Hence, a facilitated control of the drawbar arrangement may be provided depending on a driving scenario, for example depending on driving speed and/or driving direction of the trailer when the drawbar arrangement is attached to the trailer. Further, when the driving scenario indicates a coupling action of the trailer this may facilitate the coupling of the trailer to the truck when the drawbar arrangement is attached to the trailer.

When the sensor arrangement comprises a plurality of sensors, this may further provide input for the drawbar arrangement to activate a preferred subset of sensor(s) in the plurality of sensors of the sensor arrangement.

Accordingly, this embodiment may provide data input with increased relevance (and also less power consumption), by activating the preferred subset of sensor arrangement at a preferred time and/or activating the preferred subset of sensor(s) of the sensor arrangement when the sensor arrangement comprises a plurality of sensors.

According to an embodiment, the drawbar arrangement comprises a navigational system for providing geographical data of the drawbar arrangement. The navigational system may typically be a satellite based navigation system and may be selected from the group Global Positioning System (GPS), Galileo, Global Navigation Satellite System (GLONASS), Compass Navigation Satellite System (CNSS), Indian Regional Navigation Satellite System (IRNSS) and BeiDou Navigation Satellite System (BDS). The geographical data may comprise at least a geographical position, wherein the geographical position may comprise known obstacles and/or available space associated with the geographical position.

This embodiment may be advantageous in providing additional input to the drawbar arrangement when detecting a set of parameters in an upcoming environment of the trailer by the sensor arrangement. For example, the sensor arrangement may verify the obstacle and/or the available space provided by the geographical data. Accordingly, this embodiment may provide an improved safety and/or improved detectability of obstacles and/or available space in the upcoming environment of the trailer.

According to an embodiment the sensor arrangement comprises an aft sensor for arrangement in an aft section of the trailer when the drawbar arrangement is attached to the trailer. The set of parameters in an upcoming environment of the trailer may comprise parameters associated with an environment in a predicted path of the trailer.

This embodiment may be advantageous in providing a facilitated operation of the trailer when going backwards by determining an environment behind the trailer and thus detecting obstacles and/or available space behind the trailer.

According to an embodiment the sensor arrangement comprises at least one side sensor for arrangement on a left and/or right section of the truck with respect to a main driving direction of the truck. The set of parameters in an upcoming environment of the trailer comprises parameters associated with an environment in a predicted path of the trailer.

This embodiment may be advantageous in determining environment to the sides of the truck and possibly in a predicted path of the trailer when the trailer is coupled to a truck and the truck is in motion and is turning. The side sensor may be configured to detect the environment in a direction which the truck is turning and/or the environment in a direction opposite to which the truck is turning. Further, the side sensors may facilitate operation of the drawbar and thus the maneuvering of the trailer by the control unit controlling the lateral/pivoting position of the drawbar such that obstacles detected by the sensor arrangement is avoided by the trailer when the drawbar arrangement is coupled to the trailer. The environment determined by the side sensors may be environment or space being difficult to evaluate without the sensor input, e.g. environment not within the sight of the driver, accordingly this embodiment may improve safety and maneuverability of the trailer when the drawbar arrangement is attached to the trailer and when the trailer is coupled to the truck.

According to an embodiment the sensor arrangement comprises a rear sensor for arrangement in an aft section of the truck and wherein the set of parameters in an upcoming environment of said trailer comprises parameters associated with an environment in a predicted path of said trailer.

This embodiment is advantageous in determining environment in front of the trailer and thus in a predicted path of the trailer when the trailer is moving forward and preferably, when the truck is turning. Further, this embodiment is advantageous in facilitating coupling of the trailer to a truck and/or an intermediate trailer arranged in front of the trailer when the set of parameters are associated with a coupling position of a vehicle in front of the trailer. Further, this embodiment may advantageous in that the sensor is arranged on the truck which facilitates installation of the drawbar arrangement by having less parts installed in the trailer. Since a truck may be used for different trailers, the more components comprised in the drawbar arrangement that are arranged onto the truck instead of on the trailer, is beneficial from an efficiency point of view.

According to an embodiment the sensor arrangement comprises a front sensor for arrangement on a front section of the trailer, and wherein the set of parameters in an upcoming environment of the trailer comprises parameters associated with an environment in a predicted path of the trailer and/or a coupling position of a vehicle in front of the trailer. The vehicle in front of the trailer is typically a truck or an intermediate trailer. It should be understood that the front section of the trailer is a section arranged in the front of the trailer with respect to a main towing direction of the trailer.

This embodiment is advantageous in determining environment in front of the trailer and thus in a predicted path of the trailer when the trailer is moving forward and preferably when the truck is turning. Further, this embodiment is advantageous in facilitating coupling of the trailer to a truck and/or an intermediate trailer arranged in front of the trailer when the set of parameters are associated with a coupling position of a vehicle in front of the trailer.

By turning it is meant that the truck has a different orientation than the trailer such that a main driving direction of the truck is different from a main towing direction of the trailer.

The main driving direction is preferably selected as a forward direction of the truck and the main towing direction is preferably selected as a forward direction of the trailer.

When driving the trailer backwards, the environment in a predicted path of the trailer is behind the trailer, with respect to the main towing direction.

According to an embodiment the drawbar arrangement comprises a user interface for receiving the set of parameters in an upcoming environment of the trailer and wherein a set of operational parameters indicating at least one of a direction and a target destination is provided by the user interface.

This embodiment is advantageous in providing the set of operational parameters manually by the user interface, wherein the set of operational parameters are based on the upcoming environment.

According to an embodiment the control unit further comprises an analyzing device configured to analyze the set of parameters in an upcoming environment of the trailer for outputting a set of operational parameters indicating at least one of a direction and a target destination based on the set of parameters and preferably wherein the analyzing device is configured to be arranged on-board at least one of the trailer, the truck and, when present, the intermediate trailer

This embodiment is advantageous in providing the set of operational parameters automatically by the analyzing device, wherein the set of operational parameters are based on the upcoming environment.

According to an embodiment, the control unit is further being configured to control the first actuator to set the drawbars distal end into the desired lateral or pivoting position based on the set of operational parameters.

This embodiment is advantageous in that the drawbar arrangement is controlled based on the operational parameters. In other word, the trailer may be controlled based on at least one of the direction, the route, and the target destination.

According to an embodiment, the first actuator controls a lateral or pivoting action of the drawbar exclusively in the pivoting plane.

This embodiment is advantageous in providing a facilitated control of the drawbar by only moving the drawbar in one plane.

According to a second aspect a trailer for being coupled to a truck or an intermediate trailer is provided, wherein the trailer comprises a frame having at least a first wheelset and a drawbar arrangement according to any one of the preceding embodiments, wherein the drawbar arrangement is attached to the first wheelset of the trailer.

In one embodiment the trailer comprises a rear wheelset and a front wheelset and the drawbar arrangement is attached to a front wheelset of the trailer.

The second aspect may exhibit the same or similar features and technical effects as the first aspect, and vice versa.

According to a third aspect a method for controlling a drawbar arrangement is provided, wherein the trailer comprises a frame having at least a first wheelset, the drawbar arrangement comprises a sensor arrangement, and a first actuator coupled to said drawbar, the trailer is communicatively coupled to a control unit configured to control the first actuator, wherein said method comprises the steps detecting, by the sensor arrangement, a set of parameters in an upcoming environment of said trailer, determining a desired lateral position of said drawbar based on said set of parameters, controlling, by the control unit, the first actuator based on the set of parameters in an upcoming environment of said trailer such that said drawbar is positioned based on the desired lateral position of said drawbar.

The third aspect may exhibit the same or similar features and technical effects as the first aspect, and vice versa.

According to an embodiment the trailer may comprise a frame having at least a rear wheelset and a front wheelset.

According to an embodiment the drawbar arrangement comprises a base portion for attachment to the front wheelset of the trailer, a sensor arrangement, and a first actuator connecting a drawbar of the drawbar arrangement to the base portion.

According to an embodiment the step of determining a lateral position is carried out by determining a desired pivoting position of the drawbar based on the set of parameters, and the step of controlling the drawbar's lateral position is achieved by controlling it into the desired pivoting position of the drawbar.

According to an embodiment the set of parameters in an upcoming environment of the trailer comprises parameters associated with a coupling position of a truck or an intermediate trailer in front of the trailer and wherein the desired pivoting position of the drawbar is determined based on the coupling position.

This embodiment is advantageous in providing a facilitated coupling of the drawbar to a truck or an intermediate trailer arranged in front of the trailer.

According to an embodiment the set of parameters associated with an environment of the trailer comprises parameters associated with an environment in a predicted path of the trailer and wherein the desired pivoting position of the drawbar is determined based on the environment in the predicted path of the trailer.

This embodiment is advantageous in providing an improved control of the trailer by taking into account the environment in the predicted path of the trailer. Thus, this embodiment may provide an improved safety and/or improved detectability of obstacles and/or available space in the upcoming environment of the trailer.

In one embodiment, the drawbar arrangement comprises a left drawbar and a right drawbar, and the lateral position may be adjusted by adjusting the length of at least one of said left drawbar and right drawbar.

In one embodiment, the left and right drawbars are connected in the distal end with a coupling means.

In one embodiment, only one of the right and left drawbars are actively adjusted in length with the first actuating means, and thereby moves the distal end of the drawbars into a desired lateral position. In other embodiments, both the right and left drawbars are adjustable in lengths with one or several actuating means.

In one aspect, the drawbar arrangement as described in any of the embodiments above, may be used for controlling the drawbar without coupling to the sensor arrangement. In this aspect, the mechanical and principle controlling of the drawbar may be used to control the lateral position of the drawbar, or drawbars in the embodiments with several drawbars.

A feature described in relation to one aspect may also be incorporated in other aspects, and the advantage of the feature is applicable to all aspects in which it is incorporated.

Other objectives, features and advantages of the present inventive concept will appear from the following detailed disclosure, from the attached claims as well as from the drawings.

Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

Moreover, it should be understood that any of the features disclosed with the drawbar arrangement, the trailer, the intermediate trailer and/or the truck can be used in different method steps. For example, by detecting the upcoming environment of the trailer by the sensor arrangement is to be considered to also disclosing the method step of detecting the environment by the sensor arrangement. Thus, all features disclosed with one embodiment that is compatible with another embodiment herein is conceivable.

### Brief description of the drawings

These and other aspects of the present invention will now be described in more detail, with reference to the appended drawings showing currently preferred embodiments of the invention.
Figs. 1a - 1b are schematic perspective views of a drawbar arrangement attached to different trailers according to embodiments of the present invention.
Figs. 2a - 2b are schematic perspective views of a drawbar arrangement according to at least one embodiment of the present invention.
Fig. 3 is a schematic perspective view of a drawbar arrangement according to an embodiment of the present invention.
Fig. 4 is a top view of a drawbar arrangement attached to a trailer and connected to a truck according to an embodiment of the present invention.
Figs. 5a - 5b are a top view of a drawbar arrangement attached to a trailer before and after the drawbar is connected to a truck according to an embodiment of the present invention.
Fig. 6 is a top view of a drawbar arrangement attached to a trailer according to an embodiment of the invention.
Fig. 7 is a flowchart of a method for controlling a drawbar arrangement according to at least one embodiment of the present invention.

### Detailed description of the invention

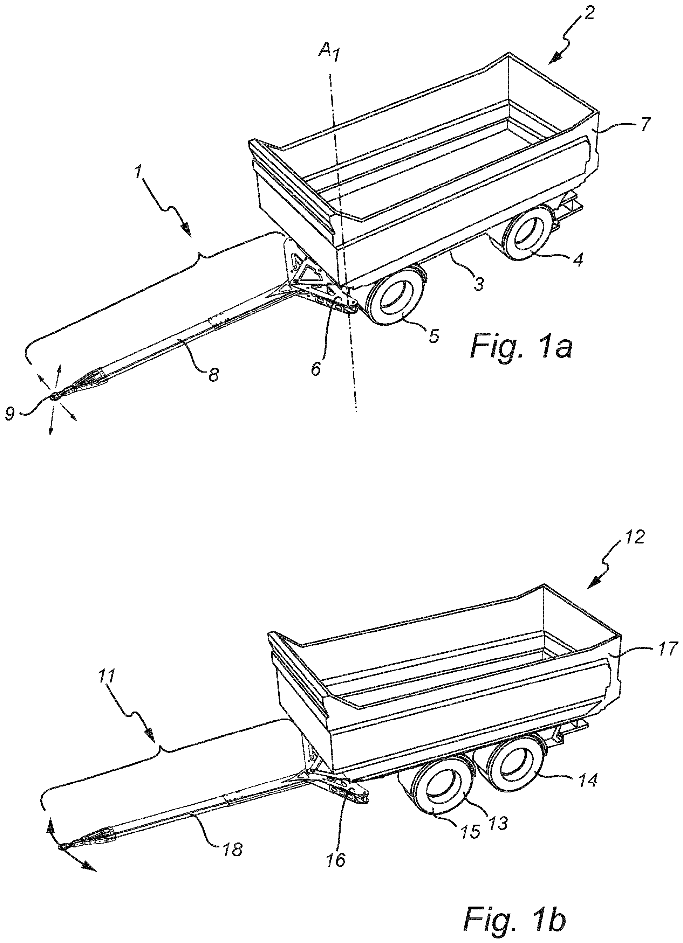

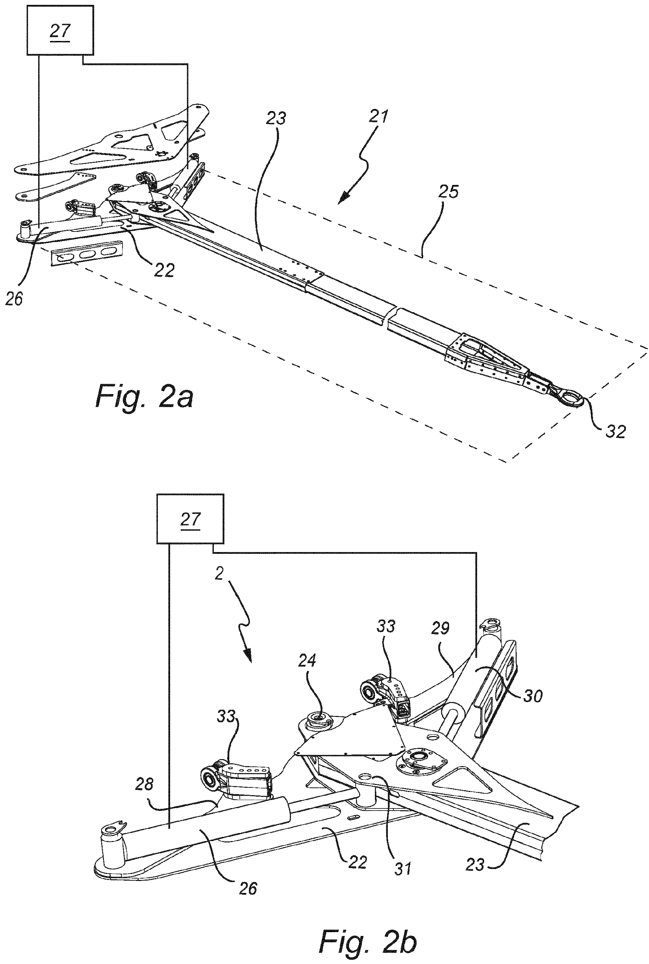

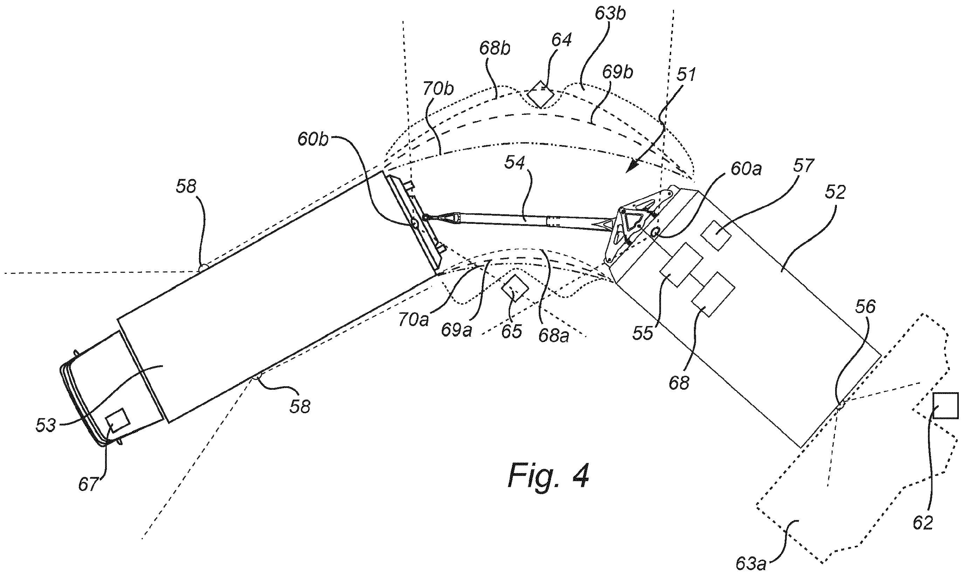

Fig. 1a illustrates a schematic perspective view of a drawbar arrangement 1 attached to a trailer 2, wherein the trailer 2 comprises a frame 3 having at least a rear wheelset 4 and a front wheelset 5, the drawbar arrangement 1 comprising a base portion 6 attached to the trailer 2, preferably to the front wheelset 5 of the trailer 2. The trailer 2 may comprise a cargo unit 7, which is illustrated as an open cargo unit in Fig. 1a. However, it should be understood that the cargo unit may be any type of unit arranged to transport goods and wherein the cargo unit is selected depending on the goods to be transported. The drawbar arrangement 1 further comprises a drawbar 8 pivotably attached to said base portion 6. Accordingly, the drawbar 8 is pivotable in substantially a sideways direction (laterally) with respect to the trailer 2 by the drawbar 8 being pivotably attached to the base portion 6. The trailer 2 may be configured to be coupled to a truck (see Fig 4) or an intermediate trailer (not shown). The drawbar 8 typically comprises a coupling means 9 for coupling to a towing vehicle, such as the truck or the intermediate trailer. The coupling means 9 may for example be a towing eye 32 as illustrated in a closer view in Fig. 2a.

Further, the drawbar arrangement 1 may be pivotably attached to the front wheelset 5 of the trailer in Fig. 1a, providing the drawbar arrangement 1 to be able to pivot with respect to the trailer 2. More specifically, the base portion 6 of the drawbar arrangement may be pivotably attached to the front wheelset 5. The drawbar arrangement 1 may pivot about a substantially horizontal axis preferably arranged substantially parallel to a wheel axis of the first wheelset 5. Accordingly, the drawbar arrangement 1 may pivot vertically when pivoting with respect to the trailer 2.

Hence, the drawbar 8 of the drawbar arrangement may pivot laterally by the drawbar 8 being pivotably attached to the base portion 6 and the drawbar arrangement 1 may pivot vertically by the base portion 6 being pivotably attached to the front wheelset 5.

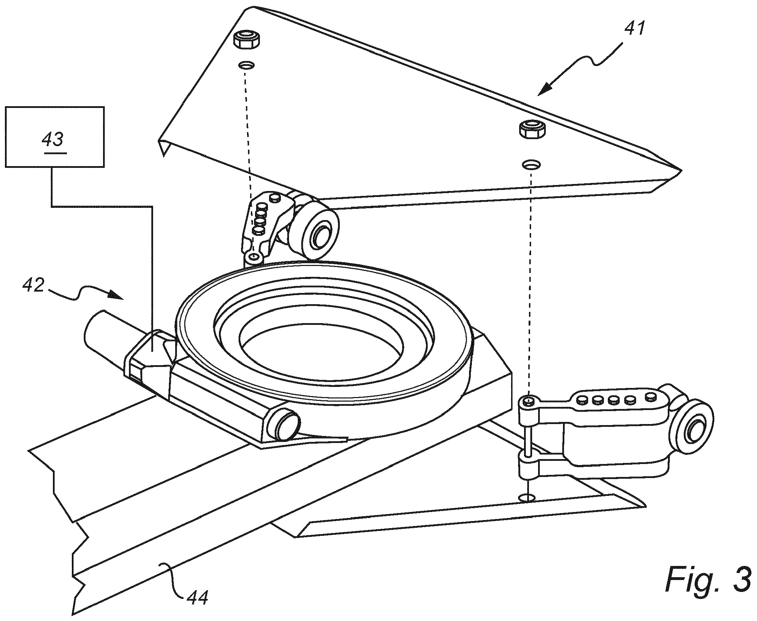

The drawbar arrangement 1 will be further discussed in relation to Figs. 2a, 2b and 3.

The front wheelset of the trailer 2 may be configured to rotate about a vertical axis, A1, to facilitate controlling the towing of the trailer 2. Accordingly, when the drawbar arrangement 1 is attached to the front wheelset 5 and the trailer 2 is coupled to a towing vehicle, e.g. a truck (see Fig. 4) or an intermediate trailer (not shown), in front of the trailer 2 by the drawbar 8, the front wheelset may rotate about the vertical axis, A1, when the drawbar 8 pivots with respect to the base portion 6 such that the front wheelset 5 is set in a desired direction, which may facilitate the maneuvering of the trailer 2 when being towed.

The trailer 2 may be substantially elongated extending between a front and aft side. Further, the trailer 2 may have a main towing direction wherein the main towing direction is typically a forward direction, i.e. a direction resulted by towing the trailer using the drawbar 8 of the drawbar arrangement 1 in a direction straight ahead. In other words, the main towing direction may be a direction extending from the aft side of the trailer to the front side parallel to the extension of the trailer 2.

Fig.1b illustrates a drawbar arrangement 11 attached to a trailer 12, wherein the trailer 12 in Fig.1b is similar to the trailer 2 of Fig. 1a, except that the front wheelset 15 of the trailer 12 is arranged further away from the side (the front side) of the trailer where the drawbar arrangement 11 is attached. In other words, the front wheelset 15 and the rear wheelset 14 are arranged closer together. Further, the front wheelset is typically not rotatable, i.e. the front wheelset of the trailer 12 is typically fixed. Which may be necessary when the wheelsets are arranged as close together as in Fig. 2b since there would be no room to rotate the front wheelset without the rear wheelset to obstruct the rotation. The front wheelset 15 and the rear wheelset 14 of the trailer 12 in Fig. 1b may typically be arranged such that the wheelsets are arranged centered on the trailer with respect to the main towing direction.

The drawbar arrangement 11 in Fig. 1b may be identical to the drawbar arrangement in Fig 1a except that the base portion 16 of the drawbar arrangement 11 in Fig 1b is fixedly attached to the front wheelset 15, at least in the vertical diction so that the drawbar arrangement 11 is not pivotable in the vertical direction. Further, the drawbar arrangement 11 may comprise an extension portion for attachment to the front wheelset of the trailer such that the base portion of the drawbar arrangement is arranged at a distance in front of the front wheelset, preferably in a front portion of the trailer. In other words, the base portion 16 of the drawbar arrangement 1 may be attached to the front wheelset by the extension portion. Alternatively, the drawbar arrangement 11 may be attached to the front wheelset 15 though attachment to the frame 13 when the frame 13 extends in front of said front wheelset 15.

By attaching the base portion 16 to the extension portion or by attaching the base portion 16 to the frame 13 according to the above, provides the base portion 16 of the drawbar arrangement 11 to be arranged in front of the front wheelset 15 and separated from the front wheelset 15 with a predetermined distance. The predetermined distance may be such that the base portion is exposed with respect to the cargo unit 17 and thus facilitates accessibility to the drawbar arrangement 11 when for example attaching the drawbar arrangement 11 or when maintenance has to be performed on the drawbar arrangement 11.

It should further be understood that the trailers 2,12 in Figs 1a and 1b may comprise more than two wheelsets, i.e. additional wheelset(s) (not shown), wherein the additional wheelset(s) may typically be arranged between the front wheelset 5,15 and the rear wheelset 4,14.

By attaching the drawbar arrangement 1,11 to the front wheelset 5,15 of the trailer 2,12 as illustrated in Figs. 1a and 1b, the distance between the drawbar arrangement and the ground on which the trailer stands may be small enough for a vehicle, such as a truck, to straddle the drawbar of the drawbar arrangement and thus an improved access to the trailer from a vehicle straddling the drawbar may be achieved. By straddle/straddling it is hereby meant to arrange a vehicle, e.g. a truck, such that the drawbar of the drawbar arrangement is arranged between at least one wheel-pair of the vehicle straddling the drawbar. In this way, the vehicle straddling the drawbar will be able to get closer to the trailer and thus provide a facilitated access to the trailer by the vehicle.

With reference to Figs. 2a - 2b the drawbar arrangement in Figs. 1a and 1b according to at least one embodiment will now be discussed. The drawbar arrangement 21 comprises a base portion 22. The base portion 22 is configured to be attached to the front wheelset of the trailer. The base portion 22 may attached to the front wheelset of the trailer by an attachment means 33. The base portion 22 may be pivotably attached to the trailer as discussed to Fig. 1a, hence the attachment means 33 may be configured to allow a pivoting motion around a substantially horizontal axis of the base portion 22 with respect to the front wheelset of the trailer so as to allow a vertical movement of the drawbar 23. Alternatively, the base portion 22 may be fixedly attached to the front wheelset as discussed to Fig. 1b. Accordingly, the attachment means 33 may be fixedly attached to the front wheelset, such that the base portion 22 is fixedly arranged with respect to the front wheelset of the trailer.

The drawbar arrangement 21 further comprises a drawbar 23 pivotably attached to said base portion 22 at a first axis 24 of said base portion 22 such that said drawbar 23 is pivotable in a pivoting plane 25. The pivoting plane 25 may be defined as a plane spanned by the drawbar 23 and the base portion 22.

The drawbar arrangement 21 further comprises at least one actuator 26, i.e. a first actuator 26, connecting said drawbar 23 to said base portion 22 and configured to control a pivoting action of the drawbar 23 in the pivoting plane 25. In the illustrated example the arrangement comprises also a second actuator 30 as illustrated in more detail in fig. 2b.

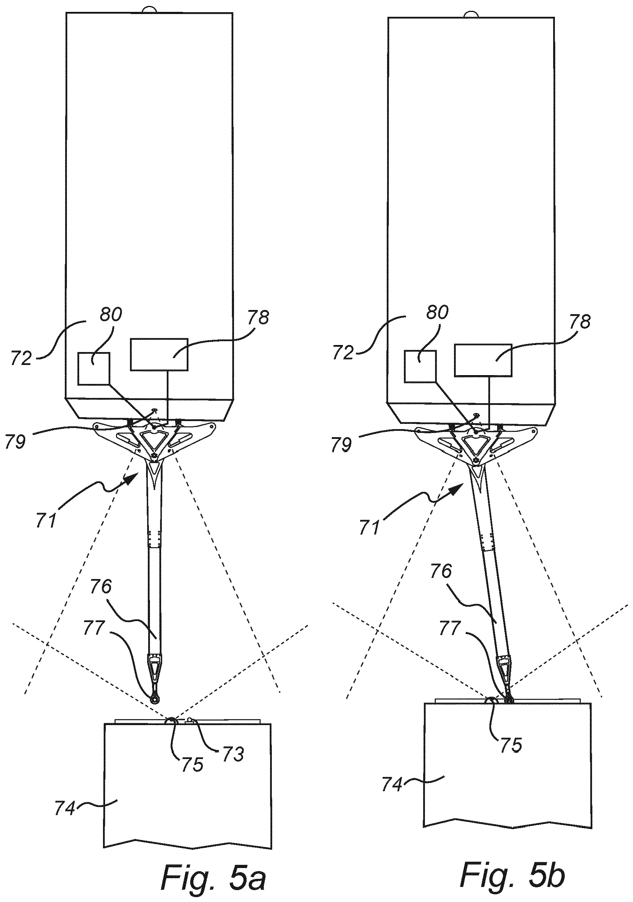

The drawbar arrangement 21 further comprises a sensor arrangement (see Figs. 4, 5a and 5b) configured to detect a set of parameters in an upcoming environment of the trailer.

The drawbar arrangement further comprises a control unit 27 communicatively coupled to the sensor arrangement. The control unit 27 is configured to receive the set of parameters detected by the sensor arrangement and determine a desired pivoting position of the drawbar 23 based on the set of parameters. The control unit is further configured to control the first actuator 26 such that the drawbar 23 is set into the desired pivoting position.

The base portion 22 may be extending in a first direction forming a first section 28 of the base portion 22. The first actuator 26 may connect the drawbar 23 to the first section 28 of the base portion 22, as illustrated in Figs. 2a - 2b. The base portion 22 may extend in a second direction forming a second section 29 of the base portion 22. The first section 28 of the base portion 22, and the second section 29, of the base portion 22 if present, may substantially extend parallel to the pivoting plane 25. In at least one embodiment the first section 28, and the second section 29 if present, may substantially extend in the pivoting plane 25. Further, the base portion 22, and the first section 28 and the second section 29 if respectively present, may extend substantially parallel to an axis along the base portion which the base portion is configured to attach to the front wheelset. The base portion 22 may in at least one embodiment be configured to pivot with respect to the front wheel set about the axis along the base portion which the base portion 22 is configured be attached to the front wheel set. In other words, the base portion 22 may extend substantially parallel to a wheel axis of the first wheelset of which the base portion 22 is configured to be attached.

The drawbar arrangement 21 may further comprise a second actuator 30, as mentioned above. The control unit 27 may further be configured to control the second actuator 30 such that the drawbar 23 is set into the desired pivoting position. Hence, the control unit 27 may be configured to control both the first and second actuator 26,30 that the drawbar 23 is set into the desired pivoting position. The second actuator 30 may connect the drawbar 23 to the second section 29 of the base portion 22.

The first and second actuator 26,30 may be configured to control a pivoting action of the drawbar 23 in the pivoting plane 25. The first actuator 26, and the second actuator 30 when present, may be arranged to control the pivoting action of the drawbar exclusively in the pivoting plane 25.

The control unit 27 may be configured to control the first actuator 26, and second actuator 30 if present, based on the set of parameters detected by the sensor arrangement.

The first actuator 26, and the second actuator 30 if present, may connect to the drawbar 23 at a connecting portion 31 of the drawbar 23 being offset from the first axis 24 such that the first actuator 26, and the second actuator 30 if present, exerts a torque to the drawbar 23 when the first actuator 26, and the second actuator 30 if present, controls the pivot position of the drawbar 23. The connecting portion 31 may be arranged towards the coupling means illustrated herein as a towing eye 32 with respect to the first axis. Alternatively, the first axis 24 may be arranged closer to the coupling means than the connecting portion 31 and the first axis 24. The distance along the drawbar, between the connecting portion and the first axis provides a leverage when displacing the first and/or second actuator 26, 30, so as to pivot the drawbar in the pivoting plane 25.

It should further be understood that the pivoting plane 25 may change orientation with respect to the trailer to which the base portion 22 is configured to be attached according to the pivoting position of the base portion 22 with respect to the front wheelset of the trailer.

The first actuator 26 may be linear actuator, such as a piston and cylinder being hydraulically, pneumatically, or electrically controlled. The second actuator 30, when present, may be of a similar, the same type or a complementary type as the first actuator 26.

Turning to Fig. 3, wherein an alternative drawbar arrangement is illustrated. The drawbar arrangement in Fig 3 may be identical to the drawbar arrangement discussed to Fig. 2a-2b except that the first actuator 42 is a circular actuator 42, for example a planar/worm gear actuator. The circular actuator 42 may be controlled by the control unit 43 such that the drawbar 44 is set into the desired pivoting position identical to the embodiment discussed in Fig. 2a-2b. The circular actuator may be complemented by a second actuator, being any type of actuator as discussed above.

With reference to Fig. 4 a drawbar arrangement 51 is attached to a trailer 52 and the trailer 52 is coupled to a truck 53 by a drawbar 54 of the drawbar arrangement 51. The drawbar arrangement 51 in Fig. 4 may be identical to either the drawbar arrangement discussed to Fig. 2a - 2b or the drawbar arrangement discussed to Fig. 3. The trailer 52 may be any type of trailer suitable to be towed by a truck though the drawbar arrangement 51, for example a trailer as discussed to Fig 1a and/or Fig. 1b.

The trailer 52 is configured to be towed by the truck 53. The trailer 52 may be configured to be towed (pulled) by the truck 53 in a direction being at least partly in the main towing direction, or to be pushed by the truck 53 in a direction being at least partly opposite to the main towing direction.

By being at least partly in the main towing direction it is hereby meant that the towing direction of the trailer 52 will have at least one resulting vector in the main towing direction. By being at least partly opposite to the main towing direction it is hereby meant that the towing direction of the trailer 52 will have at least one resulting vector opposite to the main towing direction.

The trailer 52 may be affected by the truck 53 turning (steering), depending on the movement of the truck 53 relative the orientation of the trailer 52 and/or the pivoting position of the drawbar 54. Hence, the towing direction of the trailer 52 may be determined by the driving direction of the truck 53 and/or the pivot position of the drawbar 54. Hence, the main driving direction of the truck and the main towing direction of the trailer may be different. The control unit 55 may determine a predicted path of the trailer 52 depending on at least one of the pivoting position of the drawbar 54, a driving direction of the truck 53, a towing direction of the trailer 52 and input to the sensor arrangement 56,58,60a,60b.

It should however be understood that the trailer 52 may be coupled to an intermediate trailer (not shown) by the drawbar 54 of the drawbar arrangement 51. Accordingly, the intermediate trailer may be arranged between the trailer 52 and the truck 53. The intermediate trailer may also comprise a drawbar arrangement identical to the drawbar arrangement discussed to Fig. 2a - 2b or the drawbar arrangement discussed to Fig. 3.

The control unit 55 may be arranged on-board at least one of said trailer 55, said truck 53 and, when present, said intermediate trailer.

The control unit 55 may be configured to receive a driving scenario indicating at least one of a driving speed, a forward driving direction a backward driving direction, a steering action, and a coupling action of said trailer to said truck or said intermediate trailer by the drawbar arrangement 51. When the driving scenario is received by said control unit, the control unit may be configured to activate the sensor arrangement 56,58,60a,60b and/or the control unit 55 may be configured to determine the desired pivoting position of the drawbar 54 based on the driving scenario. In other words, the driving scenario may constitute an input parameter for determination of the desired pivoting position of the drawbar 54. The driving scenario may be determined and provided to the control unit by for example an ECU (Electric control unit) of the truck 58, by manual input by the driver and/or in any way known in the art to determine the driving scenario of the truck 53.

The sensor arrangement 56,58,60a,60b may comprise an aft sensor 56 for arrangement in an aft section of the trailer 52 and the set of parameters in an upcoming environment of the trailer may comprise parameters associated with an environment behind the trailer. Accordingly, when the trailer 52 is going backwards, the aft sensor 56 is configured to detect the environment in a predicted path of the trailer. In other words, when the driving scenario indicates a backward driving direction, the aft sensor 56 may be configured to detect the environment behind the trailer 52.

Accordingly, when the trailer 52 is going backwards the environment in the predicted path of the trailer may comprise an obstacle 62 arranged behind the trailer 52 as illustrated in the Fig. 4. Further the environment in a predicted path of the trailer may comprise an available space 63a arranged behind the trailer 52 when the trailer 52 is going backwards. The control unit 55 may, based on the detected environment in the predicted path of the trailer, control the drawbar such that the trailer avoids the obstacle 62 and/or such that the trailer 52 is steered towards the available space 63a.

The sensor arrangement 56,58,60a,60b may comprise at least one front view sensor 58,60a,60b for detecting a set of parameters in an upcoming environment of the trailer, wherein the set of parameters in a upcoming environment of the trailer comprises parameters associated with an environment in a predicted path substantially in front of the trailer 52, a coupling position of a vehicle in front of the trailer and/or the coupling means of the drawbar. The at least one front view sensor 58,60a may be at least one of, a front sensor 60a for arrangement in a front section of the trailer, at least one side sensor 58 for arrangement on at least one of a left and right section of the truck with respect to a main driving direction of the truck, and a rear sensor 60b for arrangement in the aft part of the truck.

Accordingly, when the trailer 52 is going forwards and the main towing direction of the trailer being different from the main driving direction of the truck 53, i.e. the truck has steered according to the steering direction, the at least one front view sensor is configured to detect the environment in a predicted path of the trailer substantially in front of the trailer. In other words, when the driving scenario indicates the forward driving direction and the steering direction, the at least one front view sensor may be configured to detect the environment in front of the trailer.

Hence, when the trailer 52 is going forwards and has been steered according to the steering direction the environment in the predicted path of the trailer detected by the at least one front view sensor may comprise at least one obstacle 64,65 arranged in front of the trailer as illustrated in Fig. 4. Further, the environment in a predicted path of the trailer may comprise an available space 63b arranged in front of the trailer.

It should further be understood that the obstacles 64,65 and/or the available space 65 may be detected by the at least one side sensor at time t0 and the control unit may determine if the obstacles 64,65 and/or the available space 63b will be arranged in the predicted path of the trailer after a predetermined time t1, where the predetermined time t1 is the time of travel for the truck and trailer after time t0. The control unit 55 may, based on the detected environment in the predicted path of the trailer, control the drawbar such that the trailer avoids the at least one obstacle 64,65 and/or such that the trailer is steered towards the available space 63b.

When the sensor arrangement 56,58,60a,60b comprises the front sensor 60a and the at least one side sensor 58, the at least one side sensor 58 may first detect the obstacles 64,65 and/or available space 63b arranged in front of the trailer 53 secondly the front sensor 60a may detect the obstacles and/or available space 63b again at time t1. This provides a double detection of the at least one obstacle 64,65 and/or available space 63b in front of the trailer. Accordingly, the control unit may, based on the input from the at least one side sensor 58, detect the at least one obstacle 64,65 and/or available space 63b in front of the trailer 53 and, based on the input from the front sensor 60a, verify the position of the at least one obstacle 64,65 and/or available space 63b in front of the trailer.

When the drawbar is controlled such that the trailer avoids the anyone of the obstacles 62,64,65 and/or such that the trailer is steered towards the available space 63a,63b the control unit 55 may determine a new predicted path of the trailer depending on at least one of the pivoting position of the drawbar, a towing direction of the trailer, a driving direction of the truck and input to the sensor arrangement 56,58,60a,60b. Further, when the control unit 55 is not able to determine a new predicted path wherein any of the obstacles 62,64,65 is avoided the control unit 55 may provide a warning signal. The warning signal may be received by the driver which may control the truck 53 accordingly. Further, the warning signal may be received by the truck 53 which may automatically put the truck 53 to a stop. The latter may for example be realized by an ECU of the truck 53 receiving the warning signal and subsequently controlling the truck 53 to break, such that the truck 53 is put to a stop.

The drawbar arrangement 51 may comprise a user interface 67 for receiving the set of parameters in an upcoming environment of said trailer and wherein a set of operational parameters indicating at least one of a direction, a path, and a target destination is provided by the user interface. Alternatively or additionally, the control unit 55 comprises an analyzing device 59 configured to analyze the set of parameters in an upcoming environment of the trailer 52 for outputting a set of operational parameters indicating at least one of a direction, a path and a target destination based on the set of parameters. The analyzing device 59 may be configured to be arranged on-board at least one of the trailer 52, the truck 53 and, when present, the intermediate trailer.

For example, when the user interface 67 is present the user interface 67 may present data associated with the set of parameters in an upcoming environment of said trailer received by the user interface 67. Subsequently, the driver may input the operational parameters based on the present data on the user interface in order to control the pivot position of the drawbar such that the detected obstacles 62,64,65 are avoided when the trailer is moving and/or control the trailer 52 towards the available space 63a,63b. The operational parameters may for example be a direction inputted by an operation means by the driver. In another example, the driver inputs a target destination that may be transmitted from the user interface and received by the control unit, which in turn calculates a target predicted path of the trailer based on the target destination and subsequently controls the truck and the pivot position of the drawbar such that the trailer follows the target predicted path. In yet another example, the driver may select a selected path such that obstacles behind or in front of the trailer are avoided. Subsequently the control unit may control the truck and the pivot position of the drawbar such that the trailer follows the selected path. The control 55 unit may calculate a number of available paths and present the number of available paths to the driver by the user interface, and the driver may select one of these as the selected path.

When the analyzing device 59 is present, the analyzing device 59 may be configured automatically outputting the set of operational parameters indicating at least one of a direction, a path and a target destination based on the set of parameters. Subsequently the truck 53 may be automatically controlled based on the operational parameters such that the obstacles 62,64,65 in front or behind the trailer 53 is avoided and/or such that the trailer 52 is steered towards the available space 63a,63b behind or in front of the trailer 63a,63b, depending on the towing direction of the trailer 52.

Hence, the control unit 55 may further be configured to control the drawbar into the desired pivoting position based on said set of operational parameters. Hence, the control unit may control the first actuator and the second actuator, if respectively present, based on said set of operational parameters.

In order to further explain the control of the pivot position of the drawbar according to any of the above embodiments, Fig. 4 illustrates a set of paths, wherein a first path 68a,68b is indicated by an outer path 68b and an inner path 68a and a second path 69a,69b is illustrated by an outer path 69b and an inner path 69a. When the sensor arrangement 56,58,60a,60b detects at least one obstacle 64 within the first path 68a,68b, and the first path 68a,68b is the predicted path of the trailer 52, the control unit 55 may control the pivot position of the drawbar 54 such that the trailer 52 follows the second path 69a,69b when being towed, wherein the second path 69a,69b is determined/selected such that no obstacles 64,65 are arranged within the second path 69a,69b and/or such that the second path 69a,69b is arranged with the available space 63b.

The above description analogously applies when the predicted path is a third path 70a,70b indicated by the outer path 70b and the inner path 70a, and the sensor arrangement 56,58,60a,60b detects at least one obstacle 65 within the third path 70a,70b. The control unit 55 may then control the pivot position of the drawbar 54 such that the trailer 52 follows the second path 69a,69b when being towed, wherein the second path 69a,69b is determined/selected such that no obstacles 64,65 are arranged within the second path 69a,69b and/or such that the second path 69a,69b is arranged with the available space 63b.

Detecting obstacles 62,64,65 in the predicted path of the trailer 52 may be especially advantageous when the obstacles 62,64,65 are arranged hidden from the sight of the driver, such as the obstacle 64 arranged between the outer path 68b and the inner path 68a and arranged adjacent and/or close to the outer path 68b. The wording "close to the outer path 68b" should be understood as closer to the outer path 68b than the inner path 68a.

It should further be understood that the control unit 55 may determine paths behind the trailer similar to the above such that at least one obstacle 62 behind the trailer 52 is avoided and/or the trailer 52 is steered towards the available space 63a behind the trailer by controlling the pivot position of the drawbar 54, when the trailer 52 is towed in the backward direction.

The drawbar arrangement 51 may further comprises a navigational system 57 for providing geographical data to the drawbar arrangement 51, preferably to the control unit 55. The geographical data may comprise at least part of the set of parameters in an upcoming environment of the trailer 52. The control unit 55 of the drawbar arrangement 51 may, based on the geographical data control the pivot position of the drawbar 54 solely or in combination with input from the sensor arrangement 56,58,60a,60b.

It should be understood that the geographical data provided by the navigational system 57 may provide position of at least one of the obstacles 62,64,65 arranged in front and/or behind the trailer 52 and/or the available space 63a,63b in front and/or behind the trailer 52.

The navigational system 57 may indicate the at least one of the obstacles 62,64,65 to the drawbar arrangement 51 and the sensor arrangement 56,58,60a,60b may subsequently detect the obstacles 62,64,65 according to above. The detection of the obstacles 62,64,65 by the sensor arrangement 56,58,60a,60b may, in combination with the input from the navigational system 57, be a verification of the geographical data. Hence the navigational system 57 may provide improved detectability of the obstacles 62,64,65 and/or available space 63a,63b.

Turning to Figs. 5a - 5b illustrating a drawbar arrangement 71 attached to a trailer 72. The drawbar arrangement 71 may be identical to the drawbar arrangement discussed to Fig. 2a - 2b or the drawbar arrangement discussed to Fig. 3. The trailer 72 may for example be a trailer discussed to anyone of Fig. 1a or 1b.

In Fig. 5a, the drawbar arrangement 71 is attached to the trailer 72 and is not coupled to the coupling 73 of the truck 74. The sensor arrangement 56,58,60a,60b may be configured to detect at least one of the position of the drawbar 76, the coupling means 77 of the drawbar 76 and the coupling 73 of the truck 74. The control unit 78 may be configured to control the pivot position of the drawbar 76 based on at least one of the detected position of the drawbar 76, the coupling means 77 of the drawbar 76 and the position of the coupling 73 of the truck 74 in order to align the coupling means 77 and the coupling 73 of the truck 74 for coupling. Further, it should be understood that the control unit may determine the coupling means 77 based on a known pivoting position of the drawbar 76. The latter may be determined since the drawbar 76 may have a known length.

For example, the rear sensor 75 of the sensor arrangement 56,58,60a,60b being arranged on the rear section of the truck 74 may detect the drawbar 76 and/or the coupling means 77 of the drawbar 76. Further, the rear sensor 75 may detect the coupling 73 of the truck 74 and/or the coupling 73 of the truck 74 may have a predetermined position relative the rear sensor 75. The control unit 78 may control the pivot position of the drawbar based on the detected drawbar 76 and/or the coupling means 77 of the drawbar 76 and the detected position of the coupling 73 of the truck 74 in order to align the coupling means 77 and the coupling 73 of the truck 74 for coupling.

The front sensor 79 on the trailer may detect the position of the coupling 73 of the truck 74. Further, the front sensor 79 may detect the coupling means 77 of the drawbar 76 and/or the coupling means 77 of the drawbar 76 will have a predetermined position relative the front sensor 79 based on a known pivoting position of the drawbar 76. The control unit 78 may control the pivot position of the drawbar 76 based on the detected position of the coupling 73 of the truck 74 and the position of the coupling means 77 of the drawbar 76 in order to align the coupling means 77 and the coupling 73 of the truck 74 for coupling.

After aligning the coupling 73 of the truck 74 and the coupling means 77 of the drawbar 76 for coupling, the truck 74 and/or trailer 72 may be automatically and/or manually operated to move the truck 74 and/or trailer 72 closer to each other such that the coupling means 77 of the drawbar 76 mate (couple) with the coupling 73 of the truck 72, as seen in Fig 5b. By moving the truck 74 and trailer 72 closer together and having the coupling means 77 of the drawbar 76 aligned with the coupling 73 of the truck 74 coupling the coupling means 77 to the coupling 73 may be facilitated.

In order to power hydraulically, electrically and/or pneumatic devices on the trailer 72, a power transmission from the truck to the trailer may be used. In other words, a power system of the truck may be connected to the power system of the trailer in order to transmit hydraulic, electric and/or pneumatic power from the truck to the trailer. Preferably, the necessary power is transported within the drawbar to shield the hydraulic, electric and/or pneumatic lines from wear and tear. Accordingly, the drawbar of the drawbar arrangement may comprise a power transmission line being at least one of a hydraulic line, a set of electric lines and a pneumatic line. The drawbar may further comprise a first connection port for each type of power transmission line within the drawbar and for receiving power from the truck, wherein the first connection port is arranged adjacent the coupling means. The drawbar may further comprise a second connection port arranged on the drawbar adjacent the base portion for the power system of the trailer to connect to.

Thus, the power system of the truck may be connected to the first port of the drawbar and the power system of the trailer may in turn be coupled to the second port of the drawbar. The power system of the drawbar may be pre-coupled such that when the drawbar mates with the coupling of the truck and the power system of the truck connects to the first connection a power transmission between the power system of the truck and the power system of the trailer is established. Further, it should be understood that the coupling of the truck may comprise automatically connecting power lines for automatically connect with the first connection when the coupling means and the coupling of the truck mate.

The trailer may further comprise a power storage means 80. The power storage means 80 may be at least one of an electrical battery, a pressurized hydraulic tank, and a pressurized pneumatic tank. Thereby, controlling the pivot position of the drawbar before the drawbar is attached to the truck is enabled by using energy (electrical or mechanical) in the storage means.

The sensor arrangement 56,58,60a,60b may comprise a front sensor 60a for arrangement on a front section 61 of the trailer with respect to a main driving direction of the trailer and the set of parameters in an upcoming environment of the trailer may comprise parameters associated with an environment substantially in front of the trailer. Accordingly, when the trailer 52 is going forwards and the truck is steered according to the steering direction, the at least one side sensor 58 is configured to detect the environment in a predicted path of the trailer. In other words, when the driving scenario indicates the forward driving direction and the steering direction, the at least one side sensor 58 may be configured to detect the environment in front of the trailer.

Accordingly, when the trailer 52 is going forwards and is steered according to the steering direction, i.e. when the main driving direction is different to the main driving direction of the truck, the environment in the predicted path of the trailer detected by the front side sensor may comprise at least one obstacle 64,65 arranged in front of the trailer as illustrated in Fig. 4. Further the environment in a predicted path of the trailer may comprise an available space 66 arranged in front of the trailer. The control unit 55 may, based on the detected environment in the predicted path of the trailer, control the drawbar such that the trailer avoids the at least one obstacle 64,65 and/or such that the trailer is steered towards the available space 66.

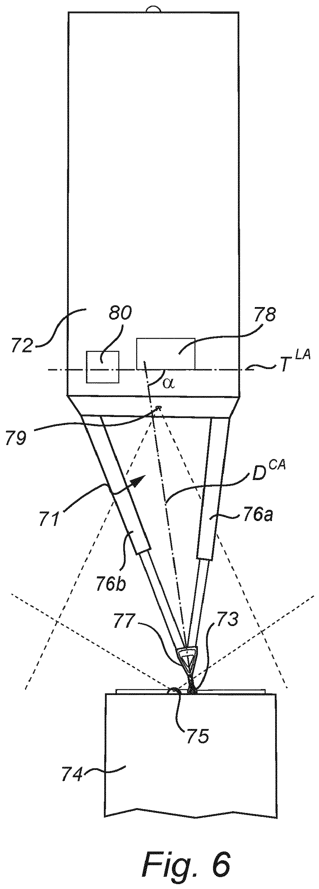

With reference to fig. 6 an embodiment with a left drawbar 76a and a right drawbar 76b will be discussed. The embodiment disclosed in fig. 6 with a right 76b and left 76a drawbar is another example on how to achieve a lateral displacement of the coupling means 77 of the trailer 72, and thereby also the coupling angle α between a trailer 72 and a towing vehicle/truck 74. In the illustrated example the truck and trailer is moving in a downwards direction. Therefore, the "left drawbar 76a", is illustrated to the right in the figure.

In this example the left drawbar 76a and the right drawbar 76b are of the same or similar type. It is also possible that the right and left drawbar would be of different types, e.g. one adjustable in length and the other being less adjustable or static in length.

In the illustrated example the right and left drawbars are telescopic drawbars that may be shortened or lengthen. The adjustment may be made with any type of actuators, such as hydraulic, pneumatic, rack and pinon, worm gears etc. If the drawbars are adjusted with an equal length extension (shortened or lengthen) the coupling point will be displaced along a centered longitudinal axis (provided that the starting point was a centered position).

However, by adjusting one of the left and right drawbars to a different length than the other one of the left and right drawbar, a lateral displacement of the distal end of the drawbar will be achieved, as is illustrated in figure 6. At the distal end the coupling means 77 is located and thus the coupling angle α between the drawbar's center axis D^{CA} the trailer's lateral axis T^{LA} may adjusted with the lengths of the right and left drawbar.

The drawbars are preferably laterally spaced apart at the trailer position, so as to create a geometrical triangle with adjustable angles as discussed in relation to the coupling angel above.

The arrangement as illustrated in fig. 6 may be used both for coupling the trailer to the truck, and/or for facilitating maneuvering of the trailer when in use, i.e. also the scenario described in relation to fig. 4 may be applicable for the embodiment with two (or more) drawbars.

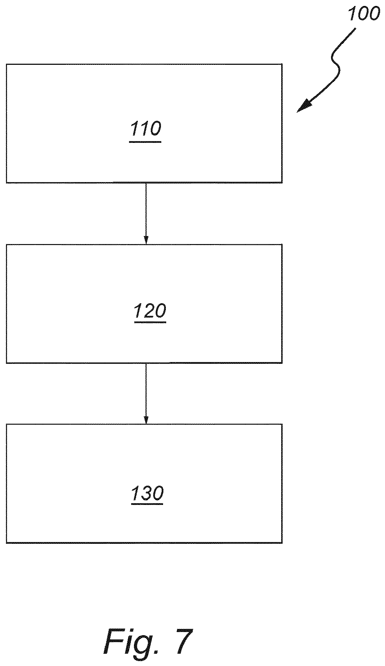

With reference to Fig. 7 a method 100 for controlling a drawbar arrangement will be discussed. The trailer may be identical to the trailer discussed in relation to e.g. Fig. 1a or Fig. 1b. Hence, the trailer comprises a frame having at least a rear wheelset and a front wheelset. The drawbar arrangement comprises a base portion for attachment to the front wheelset of the trailer. The drawbar arrangement further comprises a sensor arrangement, and a first actuator connecting a drawbar of the drawbar arrangement to the base portion. The trailer is communicatively coupled to a control unit configured to control the first actuator. The method comprises the steps
- detecting 110, by the sensor arrangement, a set of parameters in an upcoming environment of the trailer,
- determining 120 a desired pivoting position of the drawbar based on the set of parameters,
- controlling 130, by the control unit, the first actuator based on the set of parameters in an upcoming environment of the trailer such that the drawbar is pivoted based on the desired pivoting position of the drawbar.

The set of parameters in an upcoming environment of the trailer may comprise parameters associated with at least one of a coupling position of a truck or an intermediate trailer in front of the trailer and a position of the drawbar. The desired pivoting position of said drawbar is determined based on the coupling position and/or the position of the drawbar.

The set of parameters in an upcoming environment of the trailer may comprises parameters associated with an environment in a predicted path of the trailer and the desired pivoting position of the drawbar is determined based on the environment in the predicted path of the trailer.

Further, any functions or features as described in relation to the arrangement are equally applicable in the method. E.g. the arrangement is described as being controllable by pivoting the drawbar with an actuator acting on a central drawbar, this is also to be understood as a method step. Optionally, it is disclosed that the drawbar arrangement may comprise a right drawbar and a left drawbar and that at least one of the drawbars are adjustable in length with the first actuating means, so as to adjust the lateral position of the drawbar. These features are also understood to be applicable method steps disclosed herein.

## Claims

1. A drawbar arrangement (1,11,21,41,51,71) for attachment to a wheelset of a trailer (2,12,52,72) for being coupled to a truck (53,74) or an intermediate trailer, the drawbar arrangement comprising:
a drawbar (8,18,23,44,54,76) comprising a distal end having a coupling means and configured to be laterally displaceable and coupled to the truck or intermediate trailer,
a first actuator (26, 42) arranged to displace the distal end of the drawbar,
a sensor arrangement (56,58,60a,60b) configured to detect a set of parameters in an upcoming environment of said trailer, and
a control unit (27,55,78) communicatively coupled to said sensor arrangement and configured to receive said set of parameters and determine a desired lateral position of said coupling means based on said set of parameters, said control unit further being configured to control the drawbar arrangement such that said coupling means is set into the desired lateral position.

2. A drawbar arrangement according to claim 1 further comprising:
a base portion (6,16,22) coupled to said wheelset.
wherein the drawbar (8,18,23,44,54,76) is pivotably attached to said base portion at a first axis (24) of said base portion such that said drawbar is pivotable in a pivoting plane (25).
wherein the first actuator (26,42) connecting said drawbar to said base portion and configured to control a pivoting action of said drawbar in said pivoting plane.
wherein the control unit (27,55,78) is configured to control the first actuator such that said drawbar is set into the desired lateral position by pivoting the drawbar.

3. A drawbar arrangement according to anyone of claims 1-2, wherein the control unit further receives a driving scenario indicating at least one of
- a driving speed,
- a forward driving direction
- a backward driving direction,
- a steering direction, and
- a coupling action of said trailer to said truck or said intermediate trailer by the drawbar arrangement, and
wherein said driving scenario received by said control unit activates said sensor arrangement and/or constitutes an input parameter for determination of the desired lateral position of the drawbar.

4. A drawbar arrangement according to anyone of claims 1-3, comprising a navigational system (57) for providing geographical data of said drawbar arrangement.

5. A drawbar arrangement according to anyone of claims 1 - 4, wherein said sensor arrangement comprises:
an aft sensor (56) for arrangement in an aft section of said trailer, and
wherein said set of parameters in an upcoming environment of said trailer comprises parameters associated with an environment in a predicted path of said trailer.

6. A drawbar arrangement according to anyone of claims 1 - 5, wherein said sensor arrangement comprises
at least one side sensor (58) for arrangement on a left and/or right section of the truck with respect to a main driving direction of the truck, and
wherein said set of parameters in an upcoming environment of said trailer comprises parameters associated with an environment in a predicted path of said trailer.

7. A drawbar arrangement according to anyone of claims 1 - 6, wherein said sensor arrangement comprises:
a rear sensor (60b) for arrangement in an aft section of said truck, and
wherein said set of parameters in an upcoming environment of said trailer comprises parameters associated with an environment in a predicted path of said trailer.

8. A drawbar arrangement according to anyone of claims 1 - 7, wherein said sensor arrangement comprises:
a front sensor (60a) for arrangement on a front section of the trailer, and wherein said set of parameters in an upcoming environment of said trailer comprises parameters associated with an environment in a predicted path of said trailer and/or a coupling position of a vehicle in front of said trailer.

9. A drawbar arrangement according to anyone of the preceding claims, wherein the drawbar arrangement comprises
a user interface (67) for receiving the set of parameters in an upcoming environment of said trailer and wherein a set of operational parameters indicating at least one of a direction, a route, and a target destination is provided by the user interface.

10. A drawbar arrangement according to anyone of the preceding claims, wherein the control unit further comprises
an analyzing device (59) configured to analyze the set of parameters in an upcoming environment of said trailer for outputting a set of operational parameters indicating at least one of a direction, a route and a target destination based on the set of parameters and preferably wherein the analyzing device is configured to be arranged on-board at least one of said trailer, said truck and, when present, said intermediate trailer.

11. A drawbar arrangement according to claim 9 or 10, wherein the control unit is further being configured to control the drawbar into the desired lateral position based on said set of operational parameters.

12. A trailer (2,12,52,72) for being coupled to a truck (53,74) or an intermediate trailer, the trailer comprising a frame (3,13) having at least a first wheelset (4,14, 5,15) and a drawbar arrangement according (1,11,21,41,51,71) to any one of the preceding claims, wherein the drawbar arrangement is attached to the first wheelset of said trailer.

13. A method (100) for controlling a drawbar arrangement, wherein the trailer comprises a frame having at least a first wheelset, the drawbar arrangement comprises a sensor arrangement, and a first actuator coupled to said drawbar, the trailer is communicatively coupled to a control unit configured to control the first actuator, wherein said method comprises the steps
- detecting (110), by the sensor arrangement, a set of parameters in an upcoming environment of said trailer,
- determining (120) a desired lateral position of said drawbar based on said set of parameters,
- controlling (130), by the control unit, the first actuator based on the set of parameters in an upcoming environment of said trailer such that said drawbar is positioned based on the desired lateral position of said drawbar.

14. A method according to claim 13, wherein the set of parameters in an upcoming environment of said trailer comprises parameters associated with at least one of a coupling position of a truck or an intermediate trailer in front of said trailer and a position of the drawbar and wherein the desired lateral position of said drawbar is determined based on said coupling position.

15. A method according to claim 13 - 14, wherein the set of parameters in an upcoming environment of said trailer comprises parameters associated with an environment in a predicted path of said trailer and wherein the desired lateral position of said drawbar is determined based on said environment in the predicted path of said trailer.
